# EUROPEAN PATENT APPLICATION

(11) **EP 3 479 707 A1**
(43) Date of publication of application: **08.05.2019**
(21) Application number: 18183516.6
(22) Date of filing: 13.07.2018
(51) Int. Cl.: A24F 47/00

(54) **BATTERY ASSEMBLY AND ELECTRONIC CIGARETTE HAVING SAME**

(30) Priority: 07.11.2017 CN 201721484908 U
(71) Applicant: Shenzhen IVPS Technology Co., Ltd., 518000 Shenzhen Guangdong (CN)
(72) Inventor: CHEN, Wen, Shenzhen, Guangdong 518000 (CN)
(74) Representative: IP-PAL Patent & Trademark Attorneys GmbH

(57) **Abstract**

A battery assembly, for an electronic cigarette, includes a main body (10), a cover (30), and a lighting assembly (50). The main body and the cover are combined together. The lighting assembly is positioned between the main body and the cover. The cover forms a plurality of light-pervious portions (31). The lighting assembly includes a light emitting module (51) emitting light, and a light guiding module (52) guiding the light to the light-pervious portion. The light transmits out of the battery assembly via the light-pervious portions.

## Description

### CROSS REFERENCE TO RELATED APPLICATIONS

The present application claims the benefit of Chinese Patent Application NO. 201721484908.x filed on Nov. 7, 2017; the contents of which are hereby incorporated by reference.

### TECHNICAL FIELD

The present disclosure relates to electronic cigarettes, in particular to a battery assembly and an electronic cigarette having the battery assembly.

### BACK GROUND

An electronic cigarette is also known as "E-cigarette", which functions as substitutes for quitting smoking or traditional cigarettes. The electronic cigarette has similar appearance with the traditional cigarette, and generates aerosol when it is inhaled by smokers. Even, the electronic cigarette has more various tastes than the traditional cigarette. The electronic cigarette quickly becomes more and more popular because that the electronic cigarette does not generate tar and is far safer than traditional cigarette. Typically, the electronic cigarette includes an atomizer and a battery assembly for powering the atomizer. The atomizer heats tobacco liquid stored in the atomizer to generate aerosol and the smokers can inhale aerosol like inhaling the traditional smoke.

However, the typical electronic cigarette is dull and dry, this is a bad user experience and does not aid in popularize.

Therefore, there is room for improvement in the art.

### SUMMARY

A battery assembly, for an electronic cigarette, includes a main body, a cover, and a lighting assembly. The main body and the cover are combined together. The lighting assembly is positioned between the main body and the cover. The cover forms a plurality of light-pervious portions. The lighting assembly includes a light emitting module configured for emitting light, and a light guiding module configured for guiding the light to the light-pervious portion. The light transmits out of the battery assembly via the light-pervious portions.

### DRAWING

For a better understanding of the embodiments of the present disclosure or the technical scheme in the prior art, accompanying drawings needed in the description of the embodiments or the prior art are simply illustrated below. Obviously, the accompanying drawings described below are some embodiments of the present disclosure. For the ordinary skill in the field, other accompanying drawings may be obtained according to the structure shown in these accompanying drawings without creative work.
FIG.1 is an explored isometric view of a battery assembly in accordance with an embodiment.
FIG. 2 is an explored isometric view of a lighting assembly of the battery assembly in accordance with an embodiment.
FIG. 3 is a cross-section view of a battery assembly in accordance with an embodiment.
FIG. 4 is an enlarge view of a potion A in FIG.3 in accordance with an embodiment.

### SPECIFICATION

A clear and complete description as below is provided for the technical scheme in the embodiments of the present disclosure in conjunction with the drawings in the embodiments of the present disclosure. Obviously, the embodiments described hereinafter are simply part embodiments of the present disclosure, but all the embodiments. All other embodiments obtained by the ordinary skill in the art based on the embodiments in the present disclosure without creative work are intended to be included in the scope of protection of the present disclosure.

It should be noted that all directional indications (such as top, bottom, left, right, front, behind...) in the embodiments of the present disclosure are merely to illustrate a relative position relation, a relative motion condition, etc. between each part in a certain state (for example, the state shown in the drawings). If the state changes, the directional indication changes accordingly.

In addition, if terms "first", "second", etc. appear in the present disclosure, they are merely for the purpose of description, but cannot be understood as the indication or implication of relative importance or as the implicit indication of the number of the designated technical features; therefore, features defined by "first" and "second" may specifically or implicitly include one or more such features. In the description of the present disclosure, unless otherwise stated, "a plurality of" means at least two, for example, two, three, etc.

In the present disclosure, unless otherwise specifically stated and defined, terms "connected", "fixed", etc. should be interpreted expansively. For example, "fixed" may be fixed connection, also may be detachable connection, or integration; may be mechanical connection, also may be electrical connection; may be direct connection, also may be indirect connection through an intermediate, and may be internal communication between two elements or interaction of two elements, unless otherwise specifically defined. The ordinary skill in this field can understand the specific implication of the above terms in the present disclosure according to specific conditions.

In addition, technical schemes of each embodiment of the present disclosure maybe combined mutually; however, this must be carried out on the basis that the or ordinary skill in this field can implement the combination. When the combination of technical schemes has a conflict or cannot be implemented, it should considered that such combination of technical schemes does not exist and is not in the scope of protection claimed by the present disclosure.

The present disclosure relates to a battery compartment for an electronic cigarette, aiming to solve the problem of a user experience in related art.

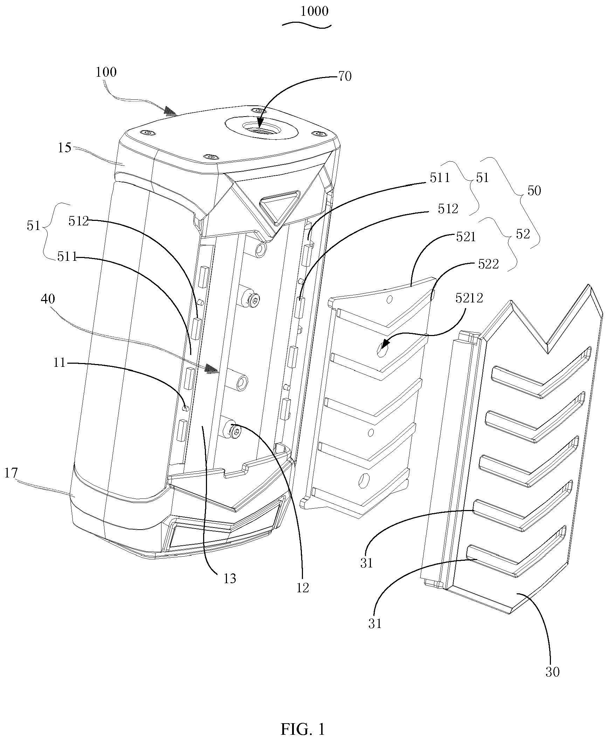

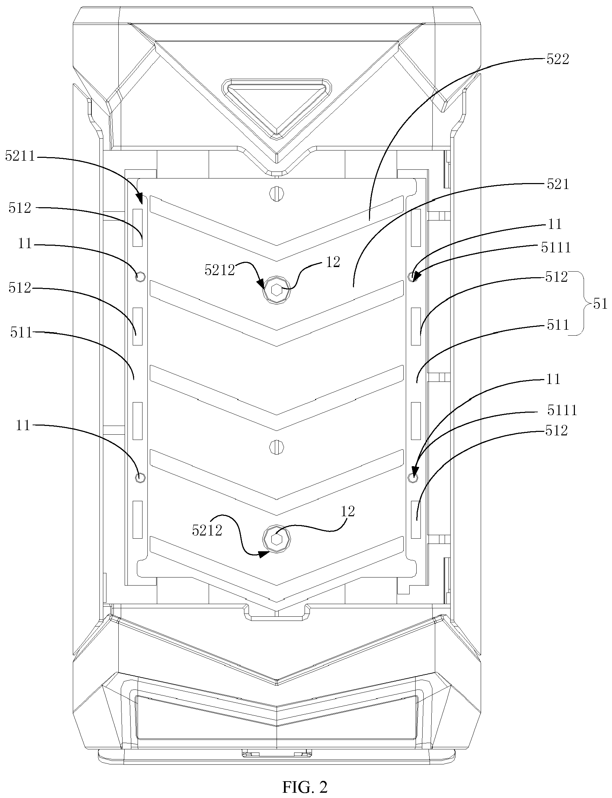

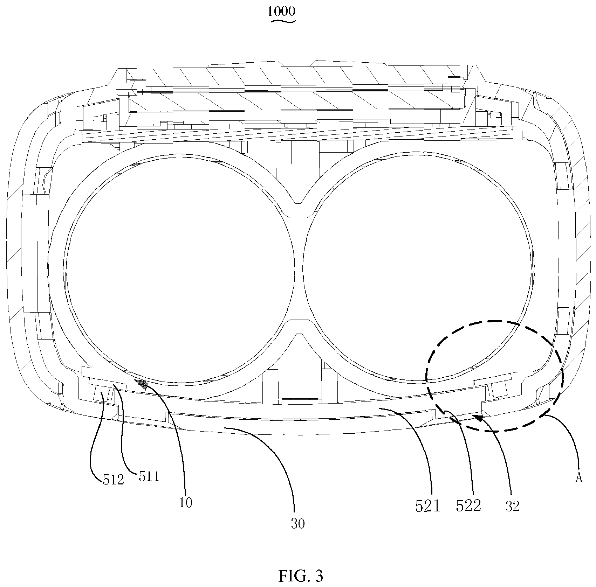

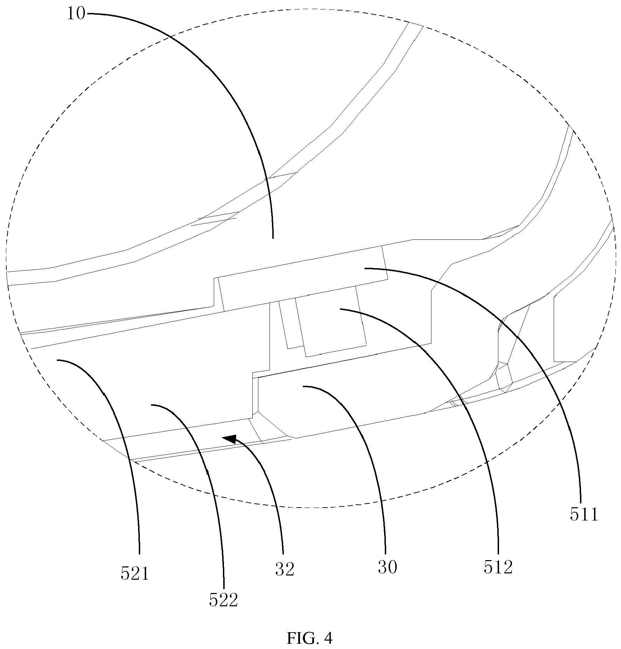

FIGs.1-4 illustrates an electronic cigarette 1000 in accordance with an embodiment. The electronic cigarette 1000 heats smoking article, the smoking article may be solid or liquid and may comprise nicotine. In this embodiment, the electronic cigarette 1000 includes a battery assembly 100, and an atomizer (not shown). The atomizer is detachably mounted to the battery assembly 100, and configured to power the atomizer. The atomizer heats the liquid smoking article to generate aerosol. In other embodiments, the atomizer and the battery assembly 100 are undetachable. In other embodiments, the electronic cigarette 1000 is capable of heating a solid smoking article without the atomizer. It is understood that, the battery assembly 100 maybe also called the electronic cigarette, such as the battery assembly 100 is undetachably secured to the atomizer, or the battery assembly 100 is contained in an electronic cigarette which is capable of heating the solid smoking article without the atomizer.

The battery assembly 100 includes a main body 10, a cover 30 combined with the main body 10, a lighting assembly 50 positioned between the cover 30 and the main body 10, a plurality of light-pervious portions 31. The main body 10 and the cover 30 are combined together to form a receiving space 40 for accommodating the lighting assembly 50. The plurality of light-pervious portions 31 are positioned in the cover 30 at equal intervals. The lighting assembly 50 is configured for emitting light and transmitting the light out of the battery assembly 100 via the light-pervious portions 31.

The main body 10 includes a first end 15 with a connecting portion 70, and a second end 17 opposite to the first end 15, and an engaging side 13 facing the cover 30 and positioned between the first end 15 and a second end 17. The battery assembly 100 is engaged with the atomizer via the connecting portion 70. The main body 10 further includes at least one positioning post 11, and a plurality of securing posts 12 positioned at the engaging side 13. The securing posts 12 are arranged in a first straight line along a longitudinal direction of the main body 10 extending from the first end 15 to the second end 17. In this embodiment, the main body 10 includes a plurality of positioning posts 11. The positioning posts 11 are arranged in two parallel second straight lines adjacent to edges of the engaging side 13, and parallel to the first straight line. The securing posts 12 are positioned between the two lines of the positioning posts 11.

The lighting assembly 50 includes at least two light emitting module 51, and a light guiding module 52. The light emitting modules 51 emit light. The light guiding module 52 guides light to the light-pervious portions 31. In this embodiment, the lighting assembly 50 includes two light emitting modules 51. The light emitting modules 51 face two edges of the light guiding module 52. The light emitting module 51 includes a long-stripe-like circuit board 511 and a plurality of lamps 512. The circuit board 511 defines a plurality of positioning holes 5111. The positioning holes 5111 accommodate the positioning posts 11 that the circuit board 511 is positioned at the main body 10. The lamps 512 are LED lamps, and fixed in the circuit board 511 at equal intervals and arranged in a straight line.

The light guiding module 52 includes a guiding board 521, a plurality of guiding bars 522 protruding from the guiding board 521. The guiding bars 522 are arranged at equal intervals along a longitudinal direction of the guiding board 521. The guiding board 521 is fixed in the engaging side 13. In detail, the guiding board 521 defines a plurality of securing holes 5121. The securing holes 5121 are arranged in a straight line along the longitudinal direction of the guiding board 521, and positioned at the middle of the guiding board 521. The securing holes 5121 accommodate the securing posts 12. The guiding board 521 and the main body 10 are secured together via corresponding fastening members, such as screws (not labeled). In detail, one end of each screw is passed through the securing hole 5121 and then screwed on the securing posts 12. When the guiding board 521 is fixed on the main body 10, the guiding board 521 is positioned between the two lines of the lamps 512, and presses the circuit board 511 to enable the circuit board 511 tightly abuts the main body 10. In detail, the guiding board 521 further defines two lamp grooves 5211, and the lamps 512 expose to the cover 30 via the lamp grooves 5211. It is understood that, the guiding board 521 allows the lamps 512 to expose to the cover 30. The light guiding module 52 further includes a reflect film (not shown) fixed on a side of the guiding board 521 away from the cover 30. The reflect film gathers the light emitting by the lamps 512 and transmits the light out of the batter assembly 200 from the light-pervious portions 31.

Each guiding bar 522 is in V shaped. In this embodiment, the guiding bars 31 have the same appearances. In other embodiments, the guiding bars 31 have different appearances from each other.

The cover 30 fits the engaging side 13. The cover 30 has a transverse cross section in arc-shaped. The cover 30 defines a lot of slots which form the light-pervious portions 31 at equal intervals, and the light-pervious portions 31 are also in V-shaped which fits the guiding bar 522. It is understood that, the light-pervious portions 31 are hollow slots/ penetrating holes, and may have any appearances, such as regular shapes or irregular shapes. In this embodiment, the light-pervious portions 31 have the same appearances. In other embodiments, the light-pervious portions 31 may have different appearances from each other. When the cover 30 is assembled to the main body 10, sides of the guiding bars 522 away from the guiding board 521 extend thought the corresponding light-pervious portions 31 to expose to the air. The sides of the guiding bars 522 seal the light-pervious portions 31to enable the cover 30 to form a smooth surface again. It is also understood that, the sides of the guiding bars 522 and a side of the cover 30 away from the main body 10 form a smooth surface.

The above are preferred embodiments of the present disclosure merely and are not intended to limit the patent scope of the present disclosure. Any equivalent structures made according to the description and the accompanying drawings of the present disclosure without departing from the idea of the present disclosure, or any equivalent structures applied in other relevant technical fields directly or indirectly are intended to be included in the patent protection scope of the present disclosure.

## Claims

1. A battery assembly, for an electronic cigarette, comprising:
a main body;
a cover combined with the main body, the cover forming a plurality of light-pervious portions; and
a lighting assembly positioned between the main body and the cover, the lighting assembly comprising:
a light emitting module configured for emitting light; and
a light guiding module configured for guiding the light to the light-pervious portion, and the light transmitting out of the battery assembly via the light-pervious portions.

2. The battery assembly according to claim 1, wherein the light guiding module extends through the light-pervious portions.

3. The battery assembly according to claim 2, wherein the light-pervious portions are hollow slots.

4. The battery assembly according to claim 1, wherein the light-pervious portions are arranged along a straight line and at equal intervals.

5. The battery assembly according to claim 4, wherein the light guiding module comprises a guiding board and a plurality of guiding bars protruding from the guiding board, each guiding bar extends through each light-pervious portion correspondingly.

6. The battery assembly according to claim 5, wherein sides of the guiding bars away from the guiding board and a side of the cover away from the guiding board form a smooth surface.

7. An electronic cigarette, comprising:
a main body;
a cover combined with the main body, the cover forming a plurality of light-pervious portions; and
a lighting assembly positioned between the main body and the cover, the lighting assembly comprising:
a light emitting module configured for emitting light; and
a light guiding module configured for guiding the light to the light-pervious portion, and the light transmitting out of the battery assembly via the light-pervious portions.

8. The electronic cigarette according to claim 7, wherein the light guiding module extends through the light-pervious portions.

9. The electronic cigarette according to claim 8, wherein the light-pervious portions are hollow slots.

10. The electronic cigarette according to claim 7, wherein the light-pervious portions are arranged along a straight line and at equal intervals.

11. The electronic cigarette according to claim 10, wherein the light guiding module comprises a guiding board and a plurality of guiding bars protruding from the guiding board, each guiding bar extends through each light-pervious portion correspondingly.

12. The electronic cigarette according to claim 11, wherein sides of the guiding bars away from the guiding board and a side of the cover away from the guiding board form a smooth surface.

13. An electronic cigarette, comprising:
a atomizer; and
a battery assembly powering the atomizer, the battery assembly comprising:
a main body;
a cover combined with the main body, the cover forming a plurality of light-pervious portions; and
a lighting assembly positioned between the main body and the cover, the lighting assembly comprising:
a light emitting module emitting light; and
a light guiding module guiding the light to the light-pervious portion, and the light transmitting out of the battery assembly via the light-pervious portions.

14. The electronic cigarette according to claim 13, wherein the light-pervious portions are arranged along a straight line and at equal intervals.

15. The electronic cigarette according to claim 14, wherein the light guiding module comprises a guiding board and a plurality of guiding bars protruding from the guiding board, each guiding bar extends through each light-pervious portion correspondingly.
